# EUROPÄISCHE PATENTSCHRIFT

(11) **EP 0 654 327 B1**
(45) Veröffentlichungstag und Bekanntmachung des Hinweises auf die Patenterteilung: **11.02.1998**
(21) Anmeldenummer: 94117628.1
(22) Anmeldetag: 08.11.1994
(51) Int. Cl.: B25J 18/06, G01B 21/02, G01B 7/004

(54) **Anordnung zur Bestimmung mindestens einer variablen Teillänge von mindestens einem entlang einem Aktuator straff geführten Strang**
Device for determining the variable length of a cable guided in an actuator
Dispositif pour déterminer la longueur variable d'un câble guidé dans un actuateur

(30) Priorität: 22.11.1993 DE 4339736
(43) Veröffentlichungstag der Anmeldung: 24.05.1995
(73) Patentinhaber: Bosch-Siemens Hausgeräte GmbH, 81669 München (DE)
(72) Erfinder: Feiten, Wendelin, Dr., D-85579 Neubiberg (DE)
(74) Vertreter: Kessl, Josef

(56) Entgegenhaltungen:
- EP-A- 0 312 602
- WO-A-82/00881
- DE-A- 2 837 014
- US-A- 4 551 061
- US-A- 5 115 195

## Beschreibung

Immer häufiger werden auch komplizierte Handhabungen durch Maschinen verrichtet. In manchen Fällen müssen auch unzulängliche oder für den Menschen gefährliche Stellen durch Aktuatoren erreichbar sein. Beispiele solcher Aktuatoren sind Roboterarme, die in der industriellen Fertigung eingesetzt werden, oder Mikroaktuatoren, welche für Greifer beispielsweise Verwendung finden.

Vielfach sind industriell eingesetzte Aktuatoren komplizierte Geräte, welche mit umfangreicher Sensorik ausgestattet sind und deren Bewegungsmechanik eine aufwendige Regelung und Steuerung erfordert. Mit der zunehmenden Technisierung von Bereichen, die außerhalb sogenannter Hightech-Umgebungen liegen, erscheint es wünschenswert, kostengünstig zu fertigende und einfach zu steuernde Aktuatoren zur Verfügung zu haben. Ein künftiger Einsatzbereich solcher low-cost Geräte wäre beispielsweise bei Haushaltsgeräten denkbar.

Die Bestimmung der Lage eines an einem solchen Aktuator angebrachten Effektors stellt ein Problem dar, welches verschärft bei flexiblen und kostengünstig gefertigten Roboterarmen auftritt. Bei Knickarmrobotern wird dieses Problem dadurch gelöst, daß an den verschiedenen Gelenken jeweils Drehwinkelgeber angebracht sind, die mit einer Auswerteelektronik verbunden sind, welche aus den Drehwinkeln und den Längen der einzelnen Roboterarmsegmente die aktuelle Lage eines Effektors bestimmen kann. Eine solche Lösung erweist sich jedoch als ungeeignet, wenn es sich bei dem Roboterarm um einen in sich dehnbaren und flexiblen Aktuator handelt. Solch ein Aktuator kann beispielsweise aus einer Schraubenfeder (siehe z.B. EP-A1-0 312 602) aufgebaut sein, welche durch Zugseile betätigt wird, oder er kann beispielsweise aus aufeinander geschichteten Schläuchen bestehen, welche in Kammern unterteilt sind, die getrennt komprimiert oder expandiert werden können.

Die bisher bekannte Lösung, bei mehrgliedrigen Roboterarmen zur Positionsbestimmung einen Positionssensor pro Glied und Freiheitsgrad vorzusehen, führt zu hohen Kosten sowohl für die Sensoren als auch für die Verkabelung. Diese Lösung ist auch nicht geeignet, für flexible Roboterarme, da die vom Arm tatsächlich eingenommene Stellung von der Situation in der Umgebung, der Last und der Historie abhängt, daher im allgemeinen nicht genau bekannt ist.

Die der Erfindung zugrundeliegende Aufgabe besteht darin, eine Anordnung anzugeben, womit über entlang einem Aktuator straff verlaufende Stränge eine aktuelle Geometrie dieses Aktuators ermittelt werden kann.

Die Anordnung wird gemäß den Merkmalen des Anspruchs 1 angegeben.

Weiterbildungen dar Erfindung ergeben sich aus den Unteransprüchen.

Ein besonderer Vorteil der Erfindung besteht darin, daß Stränge geeignet sind, jeder Bewegung eines auch flexiblen Aktuators zu folgen. Die Ermittlung der Lage einzelner am Aktuator fest angebrachter Schwingungsaufnehmer über die Signallaufzeit einer Schwingung, welche sich über einen Strang ausbreitet, der entlang dieser Schwingungsaufnehmer straff verläuft, stellt eine elegante und mechanisch, sowie elektrisch einfach zu realisierende Lösung des Positionsermittlungsproblems dar.

Da die Ausbreitungsgeschwindigkeit einer Schwingung auf einem Strang auch von einer eventuell vorhandenen Zugbelastung dieses Stranges abhängt, ist es erfindungsgemäß vorgesehen, auf einer Referenzstrecke, welche eine konstante Länge hat die Ausbreitungsgeschwindigkeit dieser Schwingung zu messen, um bei der Längenermittlung der variablen Teillängen einen geringen Fehler zu erzielen.

Besonders geeignet zur Aufnahme von Schwingungen sind kapazitive, induktive oder piezokeramische Schwingungsaufnehmer. Einen mechanisch einfachen Schwingungsaufnehmer, der zudem den Vorteil hat, daß er wenig Schwingungsenergie für seine Anregung benötigt, stellt ein kapazitiver Schwingungsaufnehmer dar. Ein Teil dieses Sensors ist dabei fixiert und ein beispielsweise geladener Teil der von ihm elektrisch isoliert über eine elastische Schicht getrennt wird, wird zu einer Schwingung angeregt. Dies führt dazu, daß der Kondensator eine Wechselspannung abgibt.

In ähnlich vorteilhafter Weise läßt sich mechanisch einfach ein solcher Schwingungssensor aus einer Spule und einem Permanentmagneten realisieren.

Zur Einkopplung von mechanischen oder Schallschwingungen eignen sich besonders piezokeramische, kapazitive oder induktive Schwingungsgeber.

Eine mechanisch besonders einfache erfindungsgemäße Anordnung erreicht man, wenn man als Stränge für die Ausbreitung der Schwingung Zugstränge nutzt, die der Betätigung des Aktuators dienen und die Schwingungsaufnehmer in Führungsösen anbringt, welche zur Führung der Zugstränge am Aktuator vorgesehen sind.

Um den Verdrahtungsaufwand bei einer erfindungsgemäßen Anordnung zu minimieren, kann man alle Schwingungsaufnehmer parallel schalten und die zeitliche Abhängigkeit bei der Ausbreitung einer Schwingung auf dem Strang ausnutzen, um die an einer Auswerteeinheit nacheinander eintreffenden Signale einem jeweiligen Schwingungsaufnehmer zuzuordnen.

Vorteilhafterweise wird die erfindungsgemäße Anordnung weiter dadurch vereinfacht, daß man für den Aktuator und die Zugstränge elektrisch leitfähige Materialien verwendet und diese als Signalleitungen für die Schwingungsaufnehmer benutzt.

Im folgenden wird die Erfindung anhand von Figuren weiter erläutert.
Figur 1 zeigt ein Beispiel einer erfindungsgemäßen Anordnung,
Figur 2 zeigt einen Ausschnitt einer erfindungsgemäßen Anordnung mit einem piezokeramischen Schwingungsaufnehmer,
Figur 3 zeigt einen Ausschnitt einer erfindungsgemäßen Anordnung mit einem kapazitiven Schwingungsaufnehmer.

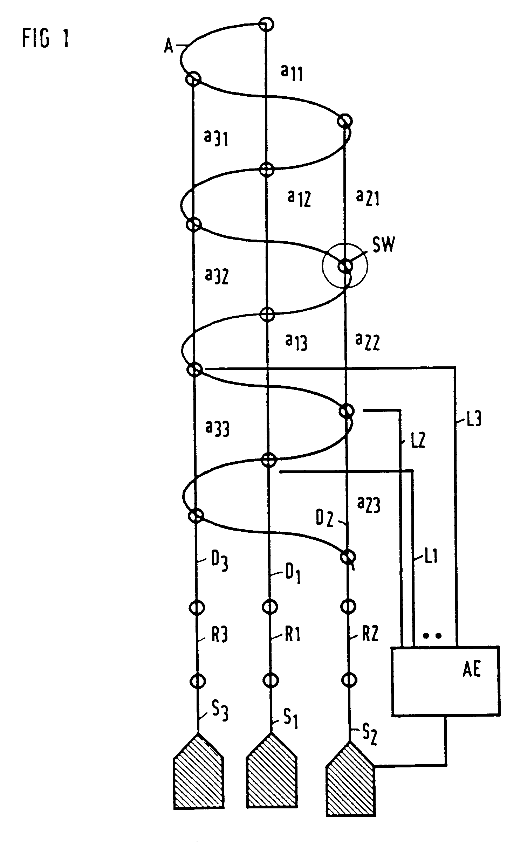

Figur 1 zeigt einen erfindungsgemäßen Aktutator A, der hier beispielsweise in Form einer Schraubenfeder ausgeführt ist. Es ist jedoch für die Erfindung ohne Belang, um welche Art von flexiblen Aktuatoren es sich handelt. Beispielsweise ist es auch denkbar, daß sich der Aktuator aus einzelnen Ringen zusammensetzt, welche in Segmente unterteilt sind, die einzeln komprimiert oder expandiert werden können. In Abhängigkeit der geometrischen Eigenschaften des Aktuators können unterschiedlich viele Schwingungsträger, d.h. Stränge entlang des Aktuators vorgesehen sein. Diese Anzahl ergibt sich aus der Zahl der Freiheitsgrade und der gewünschten Genauigkeit bei der Positionsbestimmung.

In Figur 1 sind z.B. die Zugstränge D1 bis D3, welche den Aktuator komprimieren oder verbiegen können, als Schwingungsträger vorgesehen. Wie man erkennt, wird die Schwingung über Schwingungsgeber S1 bis S3 in die in ihrer Bezeichnung korrespondierenden Zugstränge eingekoppelt. Diese Stränge sind entlang des Aktuators gleichmäßig am Umfang verteilt durch Führungsösen mit Schwingungsaufnehmern, von denen einer exemplarisch mit SW bezeichnet wurde, geführt. Zwischen diesen einzelnen Ösen mit Schwingungsgebern sind Abstände aᵢⱼ angegeben, welche als Teillängen mit der erfindungsgemäßen Anordnung und über das erfindungsgemäße Verfahren bestimmt werden können. Um die aktuell auf einem Schwingungsträger vorhandene Ausbreitungsgeschwindigkeit der Schwingung messen zu können, sind hier in Figur 1 Referenzmeßstrecken R1 bis R3 an den Zugsträngen vorgesehen. Die zugabhängige Messung der Ausbreitungsgeschwindigkeit einer Schwingung erfolgt dabei wie folgt: Über einen Schwingungsgeber S wird eine Schwingung in den entsprechenden Schwingungsträger D eingekoppelt und breitet sich mit ihrer Ausbreitungsgeschwindigkeit entlang der Referenzstrecke R aus. Die Länge dieser Referenzstrecke ist bekannt. Man erhält die Ausbreitungsgeschwindigkeit der Schwingung, indem man die Referenzstreckenlänge durch die Laufzeit der Schwingung dividiert.

Diese Ausbreitungsgeschwindigkeit wird dann in der Auswerteeinheit AE den Berechnungen der variablen Teillängen zwischen den anderen Schwingungsaufnehmern, welche an diesem Schwingungsträger angebracht sind, zugrundegelegt. Hier ist es beispielsweise vorgesehen, daß jeder einzelne Schwingungsaufnehmer mit Signalleitungen L1 bis L3 an der Auswerteeinheit AE angeschlossen ist. Eine weitere Signalleitung stellt beispielsweise hier der Schwingungsträger D dar. Die Schwingungsaufnehmer entlang eines Schwingungsträgers können jedoch auch alle parallel geschaltet sein. Das Schwingungsereignis, das dann in zeitlicher Reihenfolge in der Auswerteeinheit AE gemessen wird, wird einem bestimmten Schwingungsaufnehmer über die zeitliche Reihenfolge (Eintreffzeitreihenfolge) und die Tatsache, daß sich eine Schwingung zeitabhängig auf dem Schwingungsträger ausbreitet, zugeordnet. Die Laufzeit der Schwingung zwischen zwei benachbarten Schwingungsaufnehmern ergibt sich dann als die Differenz von zwei benachbarten Eintreffzeiten in der Eintreffzeitreihenfolge. Der Abstand bzw. die Teillänge zwischen zwei solchen benachbarten Schwingungsaufnehmern ergibt sich dann, als das Produkt aus der Schwingungslaufzeit und der Ausbreitungsgeschwindigkeit.

Als Schwingungsaufnehmer können unterschiedlichste Konstruktionen verwendet werden. Jedoch ist beim Einsatz verschiedenster Aufbauten darauf zu achten, daß nur ein Teil der Schwingungsenergie, der möglichst gering sein sollte, von einem Schwingungsaufnehmer ausgekoppelt werden sollte, da sonst nicht mehr genügend Energie zur Anregung der sich weiter hinten am Schwingungsträger befindenden Schwingungsaufnehmer zur Verfügung steht. Eine Bewegung des in Figur 1 dargestellten Aktuators A wird, wie hier dargestellt, dadurch erzeugt, daß beispielsweise die drei Schwingungsträger D1 bis D3 Zugstränge darstellen, welche durch Ösen mit Schwingungsaufnehmern SW geführt sind. Beispielsweise sind diese Zugstränge an dem oberen Ende des Aktuators befestigt und treten am unteren Ende bei den Schwingungsgebern S1 bis S3 aus dem Aktuator aus. Durch Zug an einem oder mehreren dieser Zugstränge kann nun erreicht werden, daß sich das Ende, an welchem diese Zugstränge befestigt sind, in beliebiger Weise bewegt. Auch ist eine Kompression des gesamten Aktuators (also der Schraubenfeder) leicht zu erzielen. Wie man sich vorstellen kann, verändern sich dann in Abhängigkeit der Geometrie der Feder und des eingestellten Zuges bzw. der noch für Zug zur Verfügung stehenden Länge eines solchen Zugstranges, die Abstände aᵢⱼ zwischen den einzelnen am Aktuator angebrachten Schwingungsaufnehmern.

Diese Abstände werden ermittelt, indem in den jeweiligen Zugstrang beispielsweise über einen Schwingungsgeber eine Schwingung eingekoppelt wird. Diese Schwingung durchläuft dann zunächst eine Referenzstrecke R, um in Abhängigkeit des am Zugstrang vorhandenen Zuges eine Ausbreitungsgeschwindigkeit der Schwingung zu ermitteln und erreicht anschließend nacheinander die an dem jeweiligen Zugstrang angebrachten Schwingungsaufnehmer. Von diesen Schwingungsaufnehmern werden Signale an die Auswerteeinheit AE abgegeben, welche bei einer Parallelschaltung der Signalleitungen dieser Signale von der Auswerteeinheit AE in ihrer zeitlichen Reihenfolge als Eintreffzeitreihenfolge sortiert werden. Die einzelnen Teillängen zwischen diesen Schwingungsaufnehmern lassen sich dann einfach über die Laufzeiten zwischen diesen Schwingungsaufnehmern und die anfangs ermittelte Ausbreitungsgeschwindigkeit errechnen. Die Laufzeit zwischen zwei benachbarten Schwingungsaufnehmern ergibt sich dabei als die Differenz zwischen zwei benachbarten Zeiten in der Eintreffzeitreihenfolge, die in der Auswerteeinheit je Zugstrang festgehalten wurde. Anschließend kann mit dem erfindungsgemäßen Verfahren über die Kenntnis der einzelnen Teillängen zwischen den Schwingungsaufnehmern, die Lage der einzelnen Zugstränge am Aktuator, und die Position der einzelnen Schwingungsgeber am Aktuator die exakte Position des bewegten Endes des Aktuators ermittelt werden. Somit ist auch bei einfachen und flexiblen Aktuatoren kostengünstig ein exaktes Positionieren eines Effektors, welcher am Ende des Aktuators angebracht ist, möglich.

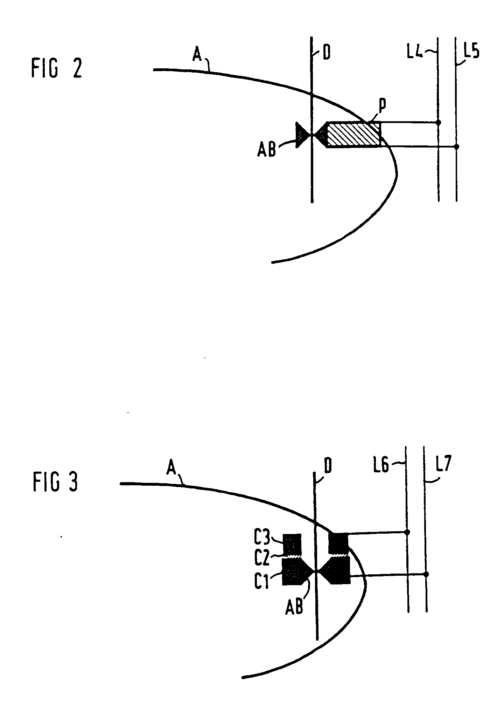

Figur 2 zeigt ein Beispiel eines Schwingungsaufnehmers, wie er in der erfindungsgemäßen Anordnung verwendet werden kann. In Figur 1 ist ein solcher Schwingungsaufnehmer SW bezeichnet. In der detaillierten Darstellung in Figur 2 ist ein Ausschnitt des Aktuators A zu erkennen. Dargestellt ist weiterhin ein Schwingungsträger D und ein Abgreifer für die Schwingung AB. Dieser Abgreifer sitzt direkt am Schwingungsträger und hat den Vorteil, daß er nur einen geringen Anteil der Schwingungsenergie benötigt, um den Piezokristall P anzuregen. Der Abgreifer AB ist über eine großflächige Verbindung mit der Piezokeramik verbunden. Diese wiederum weist zwei Anschlüsse an die Signalleitungen L4 und L5 auf, welche mit der Auswerteeinheit verbunden sind. Die Piezokeramik P ist mit dem Aktuator fest verbunden. Wird nun der Schwingungsträger D von einem nicht dargestellten Schwingungsgeber S, aus Figur 1 beispielsweise, mit einer Schwingung beaufschlagt, so pflanzt sich diese mit ihrer Ausbreitungsgeschwindigkeit entlang dieses Schwingungsträgers fort und erreicht den Abgreifer AB. Solche Schwingungen können beispielsweise Schallschwingungen, Ultraschallschwingungen oder mechanische Schwingungen sein. Bei einem solch dargestellten Abgreifer wird es sich anbieten, daß Transversalschwingungen zur Anregung des Schwingungsträgers benutzt werden. Es ist jedoch auch denkbar, daß man Longitudinalschwingungen einsetzt. Man muß dann den Abgreifer entsprechend anders gestalten. Erreicht nun eine solche Schwingung den Abgreifer, so versetzt sie diesen in Bewegung und verliert einen geringen Anteil ihrer Energie. Über eine großflächige Verbindung gibt der Abgreifer diese Schwingungsenergie an die Piezokeramik weiter und erzeugt dort eine Wechselspannung, welche über die Signalleitungen L4 und L5 an die Auswerteeinheit weitergeleitet wird. Aus dem Eintreffen des Signales bei der Auswerteeinheit läßt sich der Zeitwert bestimmen zu dem die Schwingung an dem Abgreifer eingetroffen ist. In Verbindung mit den anderen Schwingungsaufnehmern an der erfindungsgemäßen Anordnung und den jeweiligen Laufzeiten zwischen diese Schwingungsaufnehmern läßt sich dann eine Teillänge zwischen beliebigen Schwingungsaufnehmern berechnen.

In Figur 3 ist ein Beispiel für einen Schwingungsaufnehmer dargestellt, der nach dem kapazitiven Prinzip funktioniert und beispielsweise in einer erfindungsgemäßen Anordnung eingesetzt werden kann. Dieser beispielhafte Schwingungsaufnehmer besteht aus drei Schichten C1 bis C3 und einem Abgreifer AB. Analog zu dem Schwingungsaufnehmer in Figur 2 ist der Abgreifer AB hier mit einem Schwingungsträger D verbunden und ein Ring aus einem leitfähigen Material, beispielsweise Metall, ist mit dem des Aktuator A fest verbunden. Der Abgreifer AB ist an einem weiteren Ring C1 befestigt, welcher ebenfalls aus einem elektrisch leitfähigen Material besteht. Zwischen den beiden Schichten C1 und C3 befindet sich eine nichtleitende Schicht C3, welche diese beiden Schichten C1 und C3 elastisch miteinander verbindet. Über die Signalleitungen L6 und L7 kann der Kondensator beispielsweise mit einer Ladung aufgeladen werden. Falls sich nun eine Schwingung am Abgreifer AB einfindet, so wird die Schicht C3, welche mit dem Abgreifer AB gekoppelt ist, in Schwingungen versetzt und der Schwingungsträger D verliert einen geringen Teil seiner Schwingungsenergie. Die Schicht C1 wird durch Schwingungen angeregt und dadurch verändert sich die Kapazität des erfindungsgemäßen Schwingungsaufnehmers, was eine Wechselspannung an den Signalleitern L6 und L7 zur Folge hat. Die Signalleitungen L6 und L7 sind hier mit der Auswerteeinheit verbunden. In analoger Weise, wie das in der Beschreibung von Figur 2 dargelegt wurde, können dann Signale, die von mehreren solcher Schwingungsaufnehmer abgegeben werden, an de Auswerteeinheit ausgewertet werden und daraus können die Laufzeiten zwischen einzelnen solcher Schwingungsaufnehmer bestimmt werden. Über diese Laufzeiten lassen sich dann wiederum mit Hilfe der Auswerteeinheit mit der Kenntnis der Ausbreitungsgeschwindigkeit der Schwingung die entsprechenden Teillängen zwischen den einzelnen Schwingungsaufnehmern bestimmen. Über diese Teillängen läßt sich exakt die Stellung eines Aktuators ermitteln, welcher mit diesen Schwingungsaufnehmern und einem daran verschiebbar vorbeigeführten Schwingungsträger ausgerüstet ist.

## Patentansprüche

1. Anordnung zur Bestimmung mindestens einer variablen Teillänge von mindestens einem entlang einem Aktuator straff geführten Strang,
a) bei der je zu bestimmender Teillänge mindestens ein Schwingungsaufnehmer am Aktuator befestigt ist an dem der Strang frei verschiebbar vorbeigeführt ist,
b) bei der an einer Referenzstelle am Aktuator ein Schwingungsgeber angeordnet ist, der eine Schwingung auf den Strang gibt,
c) und bei der eine Auswerteeinheit vorgesehen ist, welche mit dem mindestens einen Schwingungsaufnehmer über Signalleitungen verbunden ist und die eine erste variable Teillänge aus der Ausbreitungsgeschwindigkeit der Schwingung und der Laufzeit der Schwingung von der Referenzstelle bis zu mindestens einen Schwingungsaufnehmer bestimmt.

2. Anordnung nach Anspruch 1, bei der eine Teillänge mit Konstanter Länge zur Bestimmung der Ausbreitungsgeschwindigkeit der Schwingung vorgesehen ist.

3. Anordnung nach einem der obigen Ansprüche, bei der mindestens ein kapazitiver, induktiver oder piezokeramischer Schwingungsaufnehmer vorgesehen ist

4. Anordnung nach Anspruch 3,
a) bei der als kapazitiver Schwingungsaufnehmer mindestens zwei übereinanderliegende Schichten eines leitfähigen Materials vorgesehen sind, welche über eine elastische nicht leitfähige Schicht miteinander verbunden sind, so daß sie einen Kondensator bilden,
b) bei der eine der Schichten mit dem Strang und eine andere mit dem-Aktuator verbunden ist,
c) und bei der die Schwingung eine Wechselspannung erzeugt, welche der Auswerteeinheit zugeführt wird.

5. Anordnung nach Anspruch 3,
a) bei der als induktiver Schwingungsaufnehmer eine Spule und ein Permanentmagnet nebeneinander, übereinander, oder ineinander angeordnet sind,
b) bei der einer der beiden mit dem Strang und der andere mit dem Aktuator verbunden ist,
c) und bei der die Schwingung eine Wechselspannung erzeugt, welche der Auswerteeinheit zugeführt wird.

6. Anordnung nach einem der obigen Ansprüche, bei der mindestens ein kapazitiver, induktiver oder piezokeramischer Schwingungsgeber vorgesehen ist

7. Anordnung nach einem der obigen Ansprüche,
a) bei der Schwingungsaufnehmer an Führungsösen befestigt sind, welche an benachbarten Windungen eines Aktuators in Form einer Schraubenfeder angeordnet sind, wobei eine Bewegung des Aktuators in verschiedenen Richtungen dadurch erzeugt wird, daß an einem Ende der Schraubenfeder Zugstränge angebracht sind, welche entlang der Feder durch die Führungsösen geführt sind und am anderen Ende freie austreten,
b) und bei welcher der Schwingungsgeber die Zugstränge mit einer Schwingung anregt

8. Anordnung nach einem der obigen Ansprüche, bei der die Signalleitungen elektrisch parallel geschaltet sind.

9. Anordnung nach Anspruch 8, bei welcher der Aktuator als eine erste Signalleitung und der Strang als eine zweite Signalleitung dient.

## Claims

1. Arrangement for the determination of at least one variable part length of at least one strand guided tautly along an actuator,
a) in which at least one oscillation pick-up, at which the strand is guided past to be freely displaceable, is fastened to the actuator for each part length to be determined.
b) in which an oscillation sender, which gives an oscillation on the strand, is arranged at a reference position at the actuator.
c) and in which an evaluating unit is provided, which is connected with the at least one oscillation pick-up by way of signal lines and which determines a first variable part length from the speed of propagation of the oscillation and the transit time of the oscillation from the reference position up to at least one oscillation pick-up.

2. Arrangement according to claim 1,in which the one part length is provided with a constant length for determination of the speed of propagation of the oscillation.

3. Arrangement according to one of the above claims, in which at least one capacitive, inductive or piezo-ceramic oscillation pick-up is provided.

4. Arrangement as claimed in claim 3,
a) in which at least two layers of a conductive material disposed one above the other are provided as capacitive oscillation pick-up and are connected together by way of an elastic non-conductive layer, so that they form a capacitor,
b) in which one of the layers is connected with the strand and another with the actuator,
c) and in which the oscillation generates an alternating voltage, which is fed to the evaluating unit.

5. Arrangement according to claim 3,
a) in which a coil and a permanent magnet are arranged adjacent to one another, one above the other or one within the other as inductive oscillation pick-up,
b) in which one of the two is connected with the strand and the other with the actuator,
c) and in which the oscillation generates an alternating voltage, which is fed to the evaluating unit.

6. Arrangement according to one of the above claims, in which at least one capacitive, inductive or piezo-ceramic oscillation sender is provided.

7. Arrangement according to one of the above claims,
a) in which the oscillation pick-up is fastened to guide eyes, which are arranged at coils of an actuator in the form of a helical spring, wherein a movement of the actuator in different directions is generated thereby that at one end of the helical spring tension strands are fixed, which are guided along the spring through the guide eyes and issue freely at the other end,
b) and in which the oscillation sender excites the tension strands by an oscillation.

8. Arrangement according to one of the above claims, in which the signal lines are electrically connected in parallel.

9. Arrangement according to claim 8, in which the actuator serves as a first signal line and the strand as a second signal line.

## Revendications

1. Dispositif pour déterminer au moins la longueur variable d'au moins un câble guidé de façon tendue dans un actuateur,
a) dans lequel, pour chaque longueur à déterminer, au moins un capteur d'oscillations est fixé à l'actuateur, devant lequel passe le câble en pouvant coulisser librement,
b) dans lequel un émetteur d'oscillations est disposé à un endroit de référence sur l'actuateur et émet une oscillation sur le câble,
c) et dans lequel une unité d'évaluation est prévue, laquelle est reliée à l'-au moins un- émetteur d'oscillations par des câbles de signalisation et détermine une première longueur variable à partir de la vitesse de propagation de l'oscillation et de la durée de parcours de l'oscillation de l'endroit de référence jusqu'à au moins un capteur d'oscillations.

2. Dispositif selon la revendication 1, dans lequel une longueur à longueur constante est prévue pour déterminer la vitesse de propagation de l'oscillation.

3. Dispositif selon l'une des revendications ci-dessus, dans lequel au moins un capteur d'oscillations capacitif, inductif ou piézocéramique est prévu.

4. Dispositif selon la revendication 3,
a) dans lequel au moins deux couches superposées d'une matière conductrice sont prévues comme capteur d'oscillations capacitif, lesquelles sont reliées ensemble par une couche élastique non conductrice, de sorte qu'elles forment un condensateur,
b) dans lequel une des couches est reliée au câble et une autre à l'actuateur,
c) et dans lequel l'oscillation produit une tension alternative, qui est amenée à l'unité d'évaluation.

5. Dispositif selon la revendication 3,
a) dans lequel une bobine et un amant permanent sont disposés l'un à côté de l'autre, l'un au-dessus de l'autre ou l'un dans l'autre comme capteur d'oscillations inductif,
b) dans lequel l'un des deux est relié au câble et l'autre à l'actuateur,
c) et dans lequel l'oscillation produit une tension alternative, qui est amenée à l'unité d'évaluation.

6. Dispositif selon l'une des revendications ci-dessus, dans lequel au moins un émetteur d'oscillations capacitif, inductif ou piézocéramique est prévu.

7. Dispositif selon l'une des revendications ci-dessus,
a) dans lequel des capteurs d'oscillations sont fixés à des oeillets de guidage, qui sont disposés sur les spires contiguës d'un actuateur en forme de ressort hélicoïdal, un mouvement de l'actuateur dans différents sens étant produit du fait qu'à une extrémité du ressort hélicoïdal, des câbles de traction sont mis en place, qui sont guidés le long du ressort par les oeillets de guidage et sortent librement à l'autre extrémité,
b) et dans lequel l'émetteur d'oscillations excite les câbles de traction par une oscillation.

8. Dispositif selon l'une des revendications ci-dessus, dans lequel les lignes de signalisation sont commutées électriquement en parallèle.

9. Dispositif selon la revendication 8, dans lequel l'actuateur sert de première ligne de signalisation et le câble de deuxième ligne de signalisation.
